# EUROPEAN PATENT SPECIFICATION

(11) **EP 2 244 452 B1**
(45) Date of publication and mention of the grant of the patent: **30.05.2018**
(21) Application number: 10160645.7
(22) Date of filing: 21.04.2010
(51) Int. Cl.: H04M 3/487, H04W 8/00, H04W 60/04

(54) **System and method for local marketing at the point of sale**
System und Verfahren für lokales Marketing an der Verkaufsstelle
Système et procédé de marketing local au point de vente

(30) Priority: 22.04.2009 ES 200930086
(43) Date of publication of application: 27.10.2010
(73) Proprietor: Vodafone Group PLC, Newbury Berkshire RG14 2FN (GB); Vodafone España, S.A.U., 28108 Alcobendas (ES)
(72) Inventor: Almodovar Herraiz, Daniel, E-28050, Madrid (ES); Martin Briega, Alberto, E-28050, Madrid (ES); Montaner Gutierrez, Javier, E-28050, Madrid (ES)
(74) Representative: Boult Wade Tennant

(56) References cited:
- WO-A1-2009/036497
- US-A1- 2007 015 522

## Description

### Field of the invention

The present invention lies in the field of mobile communications, and more specifically in providing a set of techniques to manage a local marketing campaign next to the point of sale.

### Background of the invention

Local marketing at the point of sale is a topic known for many years, and it has a great business potential in aspects of the marketing mix such as advertising and sales promotion (e.g. send discount coupons to people at a shopping center, for shops that are just right there). However, so far it has not succeeded commercially as much as expected. In addition to privacy and intrusion issues, one of the reasons is the technical capability of detecting what people are there and reaching them through a communications channel.

The existing solutions, from less to more technically advanced, would be the following:
- A stand with a person addressing directly people passing by and offering brochures and paper coupons.
- A stand without any person and with a screen that provides commercial information. It can include a limited level of interactivity, e.g. by pressing buttons, and it could deliver coupons, e.g. printing them.
- A stand without any person and with a Bluetooth short-range communication system that can interact with the mobile phones of people and deliver to them ads and virtual coupons (e.g. 2D codes). The same could be done with other short-range radio such as WiFi or RFID, but Bluetooth is the most popular due to its availability in many mobile phones.
- An absolute positioning method (e.g. GPS, cellular) that compares the user position with the geographical area of the shopping center, detects the event of entering there, and then, triggers the delivery of messages through the cellular channel.

The automatic solutions, without people, are obviously cheaper. However, the existing relative positioning methods, based on Bluetooh or similar radios, have a number of known drawbacks: not all mobile phones have the Bluetooth hardware, not all have it active (especially for saving battery), the discovery time can be high and the number of concurrent connections is low (generally only seven). Regarding the absolute positioning methods, the ones based on the cellular network are not accurate enough (cell resolution) and require a continuous polling or tracking or user's position that consumes network resources; and the ones based on the terminal (GPS) do not work indoors and require an internal process (local tracking) that consumes battery.

Document US2003064713 discloses an intelligent, non-intrusive, adaptive wireless discount coupon delivery system over GPRS. It describes a system which includes an enabler based on proximity detection approach, but using the real base stations in the mobile network and requiring active calls by the mobile phones (in order to be detected at the cell). However, the present invention does not use a real base station (it is indeed a fake base station) and does not require active calls in the mobile phone, it works for any switched-on mobile phone present in the coverage area.

WO2009/036497 describes systems and methods for triggering location based voice and/or data communications to or from mobile radio terminals. In particular, targeted communications are provided to a mobile terminal that are triggered based on the radio terminal being within a certain geographical location.

It is well-known that abbreviations and acronyms are frequently used in the mobile telephony field. Below is a glossary of acronyms/terms used throughout the present specification:
- 3GPP: The 3rd Generation Partnership Project
- BSC: Base Station Controller
- BTS: Base Transceiver Station
- GPRS: General Packet Radio Service
- GSM: Global System for Mobile Communications
- HLR: Home Location Register
- IMSI: International Mobile Subscriber Identity
- IP: Internet Protocol
- MCC: Mobile Country Code
- MLP: Mobile Location Protocol
- MMS: Multimedia Messaging System
- MNC: Mobile Network Code
- MSISDN: Mobile Subscriber Integrated Services Digital Number
- MSC: Mobile Switching Centre
- LAC: Location Area Code
- PLMN: Public Land Mobile Network
- RNC: Radio Network Controller
- SGSN: Serving GPRS Support Node
- SMS: Short Message Service
- TIMSI: Temporary International Mobile Subscriber Identity
- UMTS: Universal Mobile Telecommunications System
- WAP: Wireless Application Protocol

### Summary of the invention

The invention relates to a method and system for local marketing at the point of sale according to claim 1 and claim 8, respectively. Preferred embodiments of the method and system are defined in the dependent claims.

Compared to the drawbacks previously commented, the proposed invention provides several advantages:
- it is automatic;
- it supports the delivery of virtual ads and coupons to an unlimited number of users, via the cellular channel;
- it works with any standard cellular phone;
- it works with phones in idle mode (i.e. without active calls or data communications);
- it has very low battery consumption;
- it does not require continuous polling or tracking of user's absolute position, because it is based on a local unit at the point of sale (relative positioning);
- provides high resolution (coverage area can be reduced to a few meters);

The invention is composed of:
1. Transmitting and receiving function performed by a local unit that uses standard cellular mechanisms (similar to the ones in existing BTS and BSC/RNC). It broadcasts system information with a certain LAC (Location Area Code), forces all mobile phones of the same network within its reach area to send a Location Update message, captures the identity (e.g. IMSI) of those phones and sends back a Location Update reject message to avoid further disturbing the phones. The radiation pattern of the antenna system can be modified to shape the coverage area convenient to the particular use case.
2. Collection function where all the IMSI identities are forwarded. It will typically be centralised.
3. Identity management function, which translates the IMSI identity into an identity with commercial value for advertisers (e.g. MSISDN or PLMN) . It will typically require the participation of a mobile operator, since the IMSI is an identity managed internally in the cellular network.
4. Gateway function to advertising systems that triggers the event of a user being detected by the local unit. The gateway function will include typically an interface to advertisers, a mechanism for privacy control and brokerage between the advertisers and the local units. Once that the advertising systems are informed about such event, they will act accordingly (e.g. sending an MMS with a coupon), depending on the configuration of the campaign, segmentation, targeting settings, etc. The behaviour of the advertising systems once they have received the trigger is out of the scope of the invention, which covers only the system and method for producing that trigger and associate a valid identity (e.g. MSISDN) that allows the advertising systems the delivery through the regular cellular channel (e.g. SMS, MMS, WAP Push).

The method for local marketing at the point of sale comprises:
- broadcasting, in the licensed spectrum of at least one mobile network operator and from at least one local unit, each one located at a local marketing area within a corresponding coverage area, a LAC different from any other LAC of the radio cells of the mobile network in the surroundings;
- establishing each local unit a Location Update dialogue with any mobile phone answering to the LAC broadcast, obtaining from each answering mobile phone its IMSI number;
- sending each local unit a Location Updating Reject message to each mobile phone whose IMSI number has been obtained;
- sending each local unit the IMSI number of each answering mobile phone to a central unit;
- obtaining, for each IMSI number, a user identity useful to advertisers;
- offering an interface for at least one advertiser to perform requests for capturing user identities in at least one determined local marketing area;
- determining, for each user identity received, the at least one advertiser interested in capturing the user identities in the local marketing area corresponding to said user identity received. That is, brokering between the requests from the advertisers and the identities obtained (because the request from a single advertiser can be associated to several local units, and, in turn, the identities obtained from a single local unit can be associated to several advertisers); and
- providing said user identity to the at least one interested advertiser.

The identity useful to advertisers is preferably the MSISDN (i.e. phone number) or the PLMN (i.e. a number that indicates the country and mobile operator).

The coverage area of the at least one local unit can be configurable through at least one of the following parameters:
- the transmission power to modify the reach;
- the radiation pattern of the antenna system to modify the shape of the coverage area.
- the system information parameters that the regular cells in the mobile network are broadcasting to all mobile phones.

The step of obtaining, for each IMSI number, the identity useful to advertisers can also comprise retrieving said identity corresponding to said IMSI number from the corresponding mobile operator.

The method can also comprise checking, before providing the user identity to the at least one interested advertiser, in internal or external databases if there is permission to provide the user identity, so that said user identity is only provided to the at least one interested advertiser with the corresponding permission.

The broadcasting of the at least one local unit can be carried out at the same time in spectrum of different radio technologies of the same mobile network operator or at the same time in spectrum of different mobile operators (in this case the central unit manages the identities captured for the mobile phones of those said mobile operators).

The system for local marketing at the point of sale comprises:
- at least one local unit provided with cellular radio transceiver means for transmitting and receiving signals in the licensed spectrum of at least one mobile network operator, each local unit being located at a local marketing area within a corresponding coverage area, and being configured for:
   - broadcasting a LAC different from any other LAC of the radio cells of the mobile network in the surroundings;
   - establishing a Location Update dialogue with any mobile phone answering to the LAC broadcast, obtaining from each answering mobile phone its IMSI number;
   - sending a Location Updating Reject message to each mobile phone whose IMSI number has been obtained;
   - sending said IMSI number to a central unit;
- a central unit configured to:
   - obtain, for each IMSI number, a user identity useful to advertisers;
   - receive requests from at least one advertiser for capturing user identities in at least one determined local marketing area;
   - determine, for each user identity received, the at least one advertiser interested in capturing the user identities in the local marketing area corresponding to said user identity received, and provide said user identity to the at least one interested advertiser.

The at least one local unit preferably comprises means for configuring at least one of the following parameters that determines its corresponding coverage area:
- the transmission power to modify the reach;
- the radiation pattern of the antenna system to modify the shape of the coverage area;
- the system information parameters that the regular cells in the mobile network are broadcasting to all mobile phones.

In another preferred embodiment the central unit is remote to the at least one local unit and comprises data collection means configured for remotely managing the at least one local unit.

The central unit can comprise management means configured to, for each IMSI number received, retrieve the identity corresponding to said IMSI number from the corresponding mobile operator.

The central unit can be further configured to check, before providing the user identity to the at least one interested advertiser, if there is permission to provide the user identity, so that said user identity is only provided to the at least one interested advertiser with the corresponding permission.

The at least one local unit can be configured to carry out the broadcasting at the same time in spectrum of different radio technologies of the same mobile network operator or at the same time in spectrum of different mobile operators, being in the latter case the central unit configured to manage the identities captured for the mobile phones of those said mobile operators.

### Brief description of the drawings

To complete the description and, in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

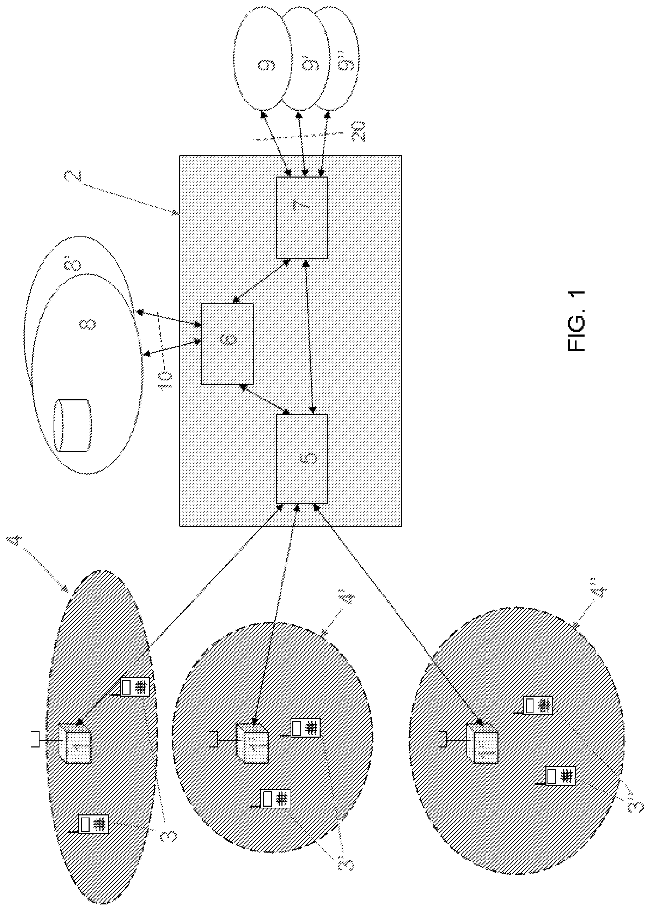

Figure 1 shows a basic diagram of the system object of invention.

### Detailed description of the preferred embodiments

The system, represented schematically in **Figure 1****,** is composed of at least one local unit (1,1',1") and a central unit 2, local or remote to the previous one.

The local unit (1,1',1") has the following function:
- An identity capture function that uses standard cellular mechanisms (similar to the ones in existing BTS and BSC/RNC). It broadcasts system information with a certain LAC (Location Area Code), forcing the mobile phones (3,3',3") of the same network within its reach area, the coverage area (4,4',4"), to send a Location Update message. It captures then the identity (e.g. IMSI) of those phones (3,3',3") and sends back a Location Update reject message to avoid further disturbing the phones (during a certain period chosen by the operator or until they are switched off). The radiation pattern of the antenna system can be modified to shape the coverage area (4,4',4") convenient to the particular use case. The identity capture function can use all the radio technologies of a mobile operator in case there are several technologies active (e.g. GSM and UMTS).

The central unit 2 has the following functions:
- A collection function, carried out by data collection means 5, that collects the captured identities. It will typically be centralized (i.e. as network server) and collect concurrently the data from different local units (1,1',1") sent via user plane (typically via an IP network). This collector function could perform the remote management of the local units as well (e.g. triggering alerts when the local units are down, changing their operating parameters, etc.). Besides, it could support a multi-operator scenario, aggregating the captures obtained from local units (1,1',1") radiating in the spectrum of different mobile operators of that country or region.
- An identity management function, carried out by management means 6, which transforms the IMSI identities (internal to the cellular network) into identities that can be useful to advertisers. The main conversion is from IMSI to MSISDN (i.e. to the telephony identity that could be used afterwards to send messages or make calls) - the mapping of these two types of identities is property of the mobile operator (it is stored in the HLR database). The management means 6 communicates 10 with the corresponding mobile operator (8,8') to obtain the MSISDN stored in its HLR database. Besides, this identity management function could include also a conversion from IMSI to PLMN, which keeps customer anonymity but can be valuable to advertisers as well (e.g. detection or roamers). It should be noted that the PLMN corresponds to the first 5 digits of the IMSI number in Europe. The first three, called MCC, indicate the country and the last two, called MNC, indicate the mobile operator within that country. The table of PLMN codes is public and well-known.
- A gateway function, carried out by interface means 7, to provide the service to advertisers (9,9',9"). This function would at least include the following sub-functions:
   - interface to advertisers (9,9',9"), based on a certain protocol, typically standard, such as OMA MLP (Triggered Services) or Parlay X Part-9
   - privacy control, to ensure that the advertisers (9,9',9") only get what they are allowed to, and that the user privacy settings are enforced. Although the identity capture function has the technical capability to capture all users of a certain operator and radio technology (e.g. GSM or UMTS), only those users with explicit consent will take part of identified services, while the rest of identities will be discarded. This consent is obtained through external means out of the scope of the invention (e.g. by the advertiser in its direct commercial relationship with customers) and then is made visible to this function (e.g. by populating a database in this function or allowing the function to query an external database). On the other hand, all users could take part on anonymous services, such as detecting what PLMN they belong to.
   - brokerage between the requests by advertisers (9,9',9") and the collection of events in the identity captured functions (i.e. mapping ones with the others). This is needed because the request by a single advertiser can be associated to several local units, and in a similar way, the events in a local unit can be assciated to several advertisers.

The interface means 7 communicates 20 with the advertisers (9,9',9"), receiving their requests (e.g., subscribing to the local marketing service) and sending the event of a user being detected by a local unit (1,1',1"). The advertising systems will act accordingly (e.g. sending an MMS with a coupon), depending of the configuration of the campaign, segmentation, targeting settings, etc. The behaviour of the advertising systems once they have received the trigger is out of the scope of the invention, which covers only the system and method for producing that trigger and associate a valid identity (e.g. MSISDN) that allows the advertising systems the delivery through the regular cellular channel (e.g. SMS, MMS, WAP Push) or enable them to extract valuable commercial information (e.g. PLMN) in anonymous way.

The function for capturing cellular identities (identity capture function) must always include a unit local to the venue (e.g. shopping centre, airport) for radio transmissions and besides may have part of its functionality located remotely in the network. This function replicates a standard cellular mechanism for the dialogue with mobile phones within its reach. In particular, this local unit broadcasts specific system information as if it was a BTS (base station) and forces a Location Update message by all mobile phones within its reach belonging to its cellular network. Then, the function captures the identity of those phones, such as the IMSI, and rejects the Location Update attempts, hence not disturbing the mobile phones further. This behaviour is based on well-known standard cellular procedures for GSM and UMTS and the local unit 1 can be built based on existing picocell or femtocell technology with a very low cost (e.g. below 200 euros). Location Update procedures are described in detail in ETSI 123 909 V4.0.0 (2001-03), a technical report from the European Telecommunications Standards Institute and 3GPP TS 23.012, from the 3rd Generation Partnership Project.

Additional details of this identity capture function are described here:
- The identity capture function (composed of the local unit plus optionally some intelligence in network systems) implements a small subset of the functionality of a BTS, BSC/RNC and MSC/SGSN, in particular the one described below.
- The local unit 1 transmits and receives in the licensed spectrum of a mobile network operator. This local unit 1 broadcasts system information in the radio interface towards the mobile phones using the standard procedures and channels for that purpose. As part of its Cell Global Identity, this unit broadcasts a LAC (Location Area Code) that is different from any LAC of the real cells of the mobile network in the surroundings (e.g. the operator can book special Location Area Codes for the road usage charging service).
- Due to the standard behaviour in any mobile phone, when a phone detects for the first time this Location Area Code because it enters under coverage of the unit, the mobile phone will initiate a Location Update dialogue with the unit.
- The identity capture function (local unit and/or network systems) will respond to that dialogue and, again following standard procedures, will force the phone to provide its IMSI number (note that even if the phone answers first with the TIMSI number, which is a temporal identity, the function can still request the phone to provide the IMSI number).
- Once obtained the IMSI number, the function will finish the dialogue sending a Location Updating Reject message to the phone with a rejection cause that will make the phone not trying again a Location Update dialogue with the function during a known timer (e.g. 2 hours) or as long as the phone keeps switched on (depending on the chosen rejection cause). This means that the mobile phone will ignore the radio transmissions of the local unit from this moment on and will not try to connect with it even it is still under the coverage of the unit, unless the period expires or the phone is switched off and switched on again within that coverage.
- Finally, for every mobile phone captured, the identity capture function will send the IMSI number to the data collection means 5 (which performs the collection function).

The coverage area (4,4',4") of the local unit (1,1',1") can be typically configured based on two aspects specific to the local unit: first, the transmission power, which determines the reach; second, the features of the antenna system (e.g. radiation pattern, gain, downtilt), which determine the shape of the coverage. In addition, the system information parameters that the regular cells in the mobile network are broadcasting to all mobile phones can be also relevant to determine the coverage of the local unit. All aspects can be statically or dynamically modified to shape a particular area that is convenient to the advertising scenario, e.g. the near space around a shop within a shopping centre.

The operating parameters of the unit (e.g. Location Area Code, transmitting power, antenna system) could be configured locally or remotely via a typical remote Operation & Maintenance system (e.g. based on IP protocols).

As mentioned before, this function for capturing identities could be entirely local (i.e. all the procedure replicating BTS, BSC/RNC and MSC/SGSN can be managed by the local unit, acting standalone) or can be a combination of local unit plus network equipment (some parts or the procedure done locally and others remotely). In any case, a local unit is always required for radio transmissions.

The local unit can be fixed (e.g. installed in the door of a shop) or mobile (e.g. installed in a bus).

The local unit can use all the radio technologies of a mobile operator in case there are several technologies active (e.g. GSM and UMTS).

In case of a multi-operator scenario, some parts of the unit should be duplicated per operator whereas others can be shared (e.g. antenna system).

In terms of physical equipment, in a typical installation there would be local units located at the areas where people has to be detected and one or several network servers performing the functions of collection, identity management and gateway.

## Claims

1. Method for local marketing at the point of sale, the method comprising:
- broadcasting, in the licensed spectrum of at least one mobile network operator and from at least one local unit (1,1',1"), each one located at a local marketing area within a corresponding coverage area (4,4',4"), a Location Area Code, LAC, different from any other LAC of the radio cells of the mobile network in the surroundings;
- establishing for each local unit (1,1',1"), a Location Update dialogue with any mobile phone (3,3',3") answering to the LAC broadcast and obtaining from each answering mobile phone (3,3',3") its IMSI number;
- sending from each local unit (1,1',1") a Location Updating Reject message to each mobile phone (3,3',3") whose IMSI number has been obtained;
- sending from each local unit (1,1',1") the IMSI number of each answering mobile phone (3,3',3") to a central unit (2);
- obtaining, for each IMSI number, a user identity useful to advertisers;
- offering an interface for at least one advertiser (9,9',9") to perform requests for capturing user identities in at least one determined local marketing area;
- determining, for each user identity received, the at least one advertiser (9,9',9") interested in capturing the user identities in the local marketing area corresponding to said user identity received, and providing (20) said user identity to the at least one interested advertiser (9,9',9").

2. Method according to claim 1, wherein the identity useful to advertisers is any of the following:
- MSISDN,
- PLMN.

3. Method according to any of previous claims, wherein the coverage area (4,4',4") of the at least one local unit (1,1',1") is configurable through at least one of the following parameters:
- the transmission power to modify the reach;
- the radiation pattern of the antenna system to modify the shape of the coverage area (4).
- the system information parameters that the regular cells in the mobile network are broadcasting to all mobile phones.

4. Method according to any of previous claims, wherein the step of obtaining, for each IMSI number, the identity useful to advertisers comprises retrieving (10) said identity corresponding to said IMSI number from the corresponding mobile operator (8',8').

5. Method according to any of previous claims, **characterized in that** it comprises checking, before providing (20) the user identity to the at least one interested advertiser (9,9',9"), if there is permission to provide the user identity, so that said user identity is only provided to the at least one interested advertiser (9,9',9") with the corresponding permission.

6. Method according to any of previous claims, wherein the broadcasting of the at least one local unit (1,1',1") is carried out at the same time in spectrum of different radio technologies of the same mobile network operator.

7. Method according to any of claims 1-6, wherein the broadcasting of the at least one local unit (1,1',1") is carried out at the same time in spectrum of different mobile operators, the central unit (2) managing the identities captured for the mobile phones (3,3',3") of those said mobile operators.

8. System for local marketing at the point of sale, the system comprising:
- at least one local unit (1,1',1") provided with cellular radio transceiver means for transmitting and receiving signals in the licensed spectrum of at least one mobile network operator, each local unit (1,1',1") being located at a local marketing area within a corresponding coverage area (4,4',4"), and comprising:
• means configured for broadcasting a Location Area Code, LAC, different from any other LAC of the radio cells of the mobile network in the surroundings;
• measn configured for establishing a Location Update dialogue with any mobile phone (3,3',3") answering to the LAC broadcast, obtaining from each answering mobile phone (3,3',3") its IMSI number;
• means configured for sending a Location Updating Reject message to each mobile phone (3,3',3") whose IMSI number has been obtained;
• means configured for sending said IMSI number to a central unit (2);
- the central unit (2) comprising:
• means configured to obtain, for each IMSI number, a user identity useful to advertisers;
• means configured to receive requests from at least one advertiser (9,9',9") for capturing user identities in at least one determined local marketing area;
• means configured to determine, for each user identity received, the at least one advertiser (9,9',9") interested in capturing the user identities in the local marketing area corresponding to said user identity received, and provide (20) said user identity to the at least one interested advertiser (9,9',9").

9. System according to claim 8, wherein the identity useful to advertisers is any of the following:
- MSISDN,
- PLMN.

10. System according to any of claims 8-9, wherein the at least one local unit (1,1',1") comprises means for configuring at least one of the following parameters that determines its corresponding coverage area (4,4',4"):
- the transmission power to modify the reach;
- the radiation pattern of the antenna system to modify the shape of the coverage area (4);
- the system information parameters that the regular cells in the mobile network are broadcasting to all mobile phones.

11. System according to any of claims 8-10, in which the central unit (2) is remote to the at least one local unit (1,1',1"), wherein the central unit (2) comprises data collection means (5) configured for remotely managing the at least one local unit (1,1',1").

12. System according to any of claims 8-11, wherein the central unit (2) comprises management means (6) configured to, for each IMSI number received, retrieve (10) the identity corresponding to said IMSI number from the corresponding mobile operator (8',8').

13. System according to any of claims 8-12, wherein the central unit (2) is further configured to check, before providing (20) the user identity to the at least one interested advertiser (9,9',9"), if there is permission to provide the user identity, so that said user identity is only provided to the at least one interested advertiser (9,9',9") with the corresponding permission.

14. System according to any of claims 8-13, wherein the at least one local unit (1,1',1") is configured to carry out the broadcasting at the same time in spectrum of different mobile operators, being the central unit (2) configured to manage the identities captured for the mobile phones (3,3',3") of those said mobile operators.

15. System according to any of claims 8-13, wherein the at least one local unit (1,1',1") is configured to carry out the broadcasting at the same time in spectrum of different radio technologies of the same mobile network operator.

## Patentansprüche

1. Ein Verfahren für lokales Marketing an der Verkaufsstelle, wobei das Verfahren Folgendes umfasst:
- Übertragen eines Aufenthaltsbereichscodes (Location Area Code, LAC), der sich von anderen LAC der Funkzellen eines Mobilfunknetzes in der Umgebung unterscheidet, im lizenzierten Spektrum mindestens eines Mobilfunknetzbetreibers und von mindestens einer lokalen Einheit (1, 1', 1"), wobei sich jede lokale Einheit in einem lokalen Marketingbereich innerhalb eines entsprechenden Versorgungsbereichs (4, 4', 4") befindet;
- Herstellen eines Aufenthaltsbereichsaktualisierungs-Dialogs mit einem beliebigen Mobiltelefon (3, 3', 3"), das auf die LAC-Übertragung antwortet, wobei dies für jede lokale Einheit (1, 1', 1") erfolgt, und Erfassen der IMSI-Nummer eines jeden antwortenden Mobiltelefons von jedem antwortenden Mobiltelefon (3, 3', 3");
- Senden einer Aufenthaltsbereichsaktualisierungs-Ablehnungsnachricht von jeder lokalen Einheit (1, 1', 1") an jedes Mobiltelefon (3, 3', 3"), dessen IMSI-Nummer erfasst wurde;
- Senden der IMSI-Nummer eines jeden antwortenden Mobiltelefons (3, 3', 3") von jeder lokalen Einheit (1, 1', 1") an eine zentrale Einheit (2);
- Erfassen einer für Werbeträger nützlichen Benutzerkennung für jede IMSI-Nummer;
- Bereitstellen einer Schnittstelle für mindestens einen Werbeträger (9, 9', 9") zum Durchführen von Anforderungen zur Erfassung von Benutzerkennungen in mindestens einem bestimmten lokalen Marketingbereich;
- Bestimmen des mindestens einen Werbeträgers (9, 9', 9") mit Interesse an der Erfassung der Benutzerkennungen in dem lokalen Marketingbereich, welcher der genannten empfangenen Benutzerkennung entspricht, wobei dies für jede empfangene Benutzerkennung erfolgt, und Bereitstellen (20) der genannten Benutzerkennung für den mindestens einen interessierten Werbeträger (9, 9', 9").

2. Das Verfahren nach Anspruch 1, wobei die für Werbeträger nützliche Kennung eine der folgenden ist:
- MSISDN,
- PLMN.

3. Das Verfahren nach einem der vorhergehenden Ansprüche, wobei der Versorgungsbereich (4, 4', 4") der mindestens einen lokalen Einheit (1, 1', 1") über mindestens einen der folgenden Parameter konfiguriert werden kann:
- die Übertragungsleistung zur Änderung der Reichweite;
- das Strahlungsmuster des Antennensystems zur Änderung der Form des Versorgungsbereichs (4);
- die Parameter der Systeminformationen, welche die regulären Zellen in dem Mobilfunknetz an alle Mobiltelefone übertragen.

4. Das Verfahren nach einem der vorhergehenden Ansprüche, wobei der Schritt der Erfassung der für Werbeträger nützlichen Kennung für jede IMSI-Nummer umfasst, dass die genannte der genannten IMSI-Nummer entsprechende Kennung von dem entsprechenden Mobilfunkbetreiber (8', 8') abgerufen wird (10).

5. Das Verfahren nach einem der vorhergehenden Ansprüche, **dadurch gekennzeichnet, dass** es vor der Bereitstellung (20) der Benutzerkennung für den mindestens einen interessierten Werbeträger (9, 9', 9") umfasst, dass überprüft wird, ob eine Genehmigung zur Bereitstellung der Benutzerkennung vorhanden ist, sodass die genannte Benutzerkennung dem mindestens einen interessierten Werbeträger (9, 9', 9") nur mit der entsprechenden Genehmigung bereitgestellt wird.

6. Das Verfahren nach einem der vorhergehenden Ansprüche, wobei die Übertragung der mindestens einen lokalen Einheit (1, 1', 1") gleichzeitig in dem Spektrum unterschiedlicher Funktechnologien desselben Mobilfunknetzbetreibers durchgeführt wird.

7. Das Verfahren nach einem der Ansprüche 1 bis 6, wobei die Übertragung der mindestens einen lokalen Einheit (1, 1', 1") gleichzeitig in dem Spektrum unterschiedlicher Mobilfunkbetreiber durchgeführt wird, wobei die zentrale Einheit (2) die Kennungen verwaltet, die für die Mobiltelefone (3, 3', 3") dieser genannten Mobilfunkbetreiber erfasst wurden.

8. Ein System für lokales Marketing an der Verkaufsstelle, wobei das System Folgendes umfasst:
- mindestens eine lokale Einheit (1, 1', 1"), die mit einer zellularen Funkempfangs-/Funksendeeinheit zur Übertragung und zum Empfang von Signalen in dem lizenzierten Spektrum mindestens eines Mobilfunknetzbetreibers vorgesehen ist, wobei sich jede lokale Einheit (1, 1', 1") in einem lokalen Marketingbereich innerhalb eines entsprechenden Versorgungsbereichs (4, 4', 4") befindet und Folgendes umfasst:
- eine Einheit, die zur Übertragung eines Aufenthaltsbereichscodes (Location Area Code, LAC) eingerichtet ist, der sich von anderen LAC der Funkzellen des Mobilfunknetzes in der Umgebung unterscheidet;
- eine Einheit, die zum Herstellen eines Aufenthaltsbereichsaktualisierungs-Dialogs mit einem beliebigen Mobiltelefon (3, 3', 3"), das auf die LAC-Übertragung antwortet, und zum Erfassen der IMSI-Nummer eines jeden antwortenden Mobiltelefons von jedem antwortenden Mobiltelefon (3, 3', 3") eingerichtet ist;
- eine Einheit, die zum Senden einer Aufenthaltsbereichsaktualisierungs-Ablehnungsnachricht an jedes Mobiltelefon (3, 3', 3"), dessen IMSI-Nummer erfasst wurde, eingerichtet ist;
- eine Einheit zum Senden der genannten IMSI-Nummer an eine zentrale Einheit (2);
die zentrale Einheit (2), die Folgendes umfasst:
- eine Einheit, die zum Erfassen einer für Werbeträger nützlichen Benutzerkennung für jede IMSI-Nummer eingerichtet ist;
- eine Einheit, die zum Empfangen von Anforderungen von mindestens einem Werbeträger (9, 9', 9") zur Erfassung von Benutzerkennungen in mindestens einem bestimmten lokalen Marketingbereich eingerichtet ist;
- eine Einheit, die zum Bestimmen des mindestens einen Werbeträgers (9, 9', 9") mit Interesse an der Erfassung der Benutzerkennungen in dem lokalen Marketingbereich eingerichtet ist, welcher der genannten empfangenen Benutzerkennung entspricht, wobei die Bestimmung für jede empfangene Benutzerkennung erfolgt, und die zum Bereitstellen (20) der genannten Benutzerkennung für den mindestens einen interessierten Werbeträger (9, 9', 9") eingerichtet ist.

9. Das System nach Anspruch 8, wobei die für Werbeträger nützliche Kennung eine der folgenden ist:
- MSISDN,
- PLMN.

10. Das System nach einem der Ansprüche 8 bis 9, wobei die mindestens eine lokale Einheit (1, 1', 1") eine Einheit zur Konfiguration von mindestens einem der folgenden, ihren entsprechenden Versorgungsbereich (4, 4', 4") bestimmenden Parameter umfasst:
- die Übertragungsleistung zur Änderung der Reichweite;
- das Strahlungsmuster des Antennensystems zur Änderung der Form des Versorgungsbereichs (4);
- die Parameter der Systeminformationen, welche die regulären Zellen in dem Mobilfunknetz an alle Mobiltelefone übertragen.

11. Das System nach einem der Ansprüche 8 bis 10, in dem die zentrale Einheit (2) eine Entfernung zu der mindestens einen lokalen Einheit (1, 1', 1") aufweist, wobei die zentrale Einheit (2) eine Datenerfassungseinheit (5) umfasst, die zur Fernverwaltung der mindestens einen lokalen Einheit (1, 1', 1") eingerichtet ist.

12. Das System nach einem der Ansprüche 8 bis 11, wobei die zentrale Einheit (2) eine Verwaltungseinheit (6) umfasst, die eingerichtet ist, um für jede empfangene IMSI-Nummer die der genannten IMSI-Nummer entsprechende Kennung von dem entsprechenden Mobilfunkbetreiber (8', 8') abzurufen (10).

13. Das System nach einem der Ansprüche 8 bis 12, wobei die zentrale Einheit (2) weiter eingerichtet ist, um vor der Bereitstellung (20) der Benutzerkennung für den mindestens einen interessierten Werbeträger (9, 9', 9") zu überprüfen, ob eine Genehmigung zur Bereitstellung der Benutzerkennung vorhanden ist, sodass die genannte Benutzerkennung dem mindestens einen interessierten Werbeträger (9, 9', 9") nur mit der entsprechenden Genehmigung bereitgestellt wird.

14. Das System nach einem der Ansprüche 8 bis 13, wobei die mindestens eine lokale Einheit (1, 1', 1") eingerichtet ist, um die Übertragung in dem Spektrum unterschiedlicher Mobilfunkbetreiber gleichzeitig durchzuführen, wobei sie die zentrale Einheit (2) darstellt, die eingerichtet ist, um die Kennungen zu verwalten, die für die Mobiltelefone (3, 3', 3") dieser genannten Mobilfunkbetreiber erfasst wurden.

15. Das System nach einem der Ansprüche 8 bis 13, wobei die mindestens eine lokale Einheit (1, 1', 1") eingerichtet ist, um die Übertragung in dem Spektrum unterschiedlicher Funktechnologien desselben Mobilfunknetzbetreibers gleichzeitig durchzuführen.

## Revendications

1. Un procédé de marketing local sur le point de vente, le procédé comprenant :
- la radiodiffusion, dans le spectre soumis à licence d'au moins un opérateur de réseau mobile et à partir d'au moins une unité locale (1, 1', 1"), chacune d'elles étant située dans une zone de marketing locale à l'intérieur d'une zone de couverture correspondante (4, 4', 4"), d'un code de zone de localisation, LAC, différent de tout autre LAC des cellules radio du réseau mobile dans le voisinage,
- l'établissement, pour chaque unité locale (1, 1', 1"), d'un dialogue d'actualisation de localisation avec tout téléphone mobile (3, 3', 3") répondant à la radiodiffusion LAC et l'obtention à partir de chaque téléphone mobile répondant (3, 3', 3") de son numéro IMSI,
- l'envoi à partir de chaque unité locale (1, 1', 1") d'un message de rejet d'actualisation de localisation à chaque téléphone mobile (3, 3', 3") dont le numéro IMSI a été obtenu,
- l'envoi à partir de chaque unité locale (1, 1', 1") du numéro IMSI de chaque téléphone mobile répondant (3, 3', 3") à une unité centrale (2),
- l'obtention, pour chaque numéro IMSI, d'une identité d'utilisateur utile à des annonceurs,
- l'offre d'une interface à au moins un annonceur (9, 9', 9") destinée à l'exécution de demandes de capture d'identités d'utilisateur dans au moins une zone de marketing locale déterminée,
- la détermination, pour chaque identité d'utilisateur reçue, du au moins un annonceur (9, 9', 9") intéressé par la capture des identités d'utilisateur dans la zone de marketing locale correspondant à ladite identité d'utilisateur reçue, et la fourniture (20) de ladite identité d'utilisateur au au moins un annonceur intéressé (9, 9', 9").

2. Le procédé selon la Revendication 1, où l'identité utile à des annonceurs est l'une quelconque parmi les suivantes :
- MSISDN,
- PLMN.

3. Le procédé selon l'une quelconque des Revendications précédentes, où la zone de couverture (4, 4', 4") de la au moins une unité locale (1, 1', 1") est configurable par l'intermédiaire d'au moins un des paramètres suivants :
- la puissance de transmission de façon à modifier la portée,
- le diagramme de rayonnement du système d'antenne de façon à modifier la forme de la zone de couverture (4).
- les paramètres d'informations système que les cellules régulières dans le réseau mobile radiodiffusent à la totalité des téléphones mobiles.

4. Le procédé selon l'une quelconque des Revendications précédentes, où l'opération d'obtention, pour chaque numéro IMSI, de l'identité utile à des annonceurs comprend la récupération (10) de ladite identité correspondant audit numéro IMSI à partir de l'opérateur mobile correspondant (8', 8').

5. Le procédé selon l'une quelconque des Revendications précédentes, **caractérisé en ce qu'**il comprend la vérification, avant la fourniture (20) de l'identité d'utilisateur au au moins un annonceur intéressé (9, 9', 9"), s'il existe une autorisation de fournir l'identité d'utilisateur, de sorte que ladite identité d'utilisateur soit uniquement fournie au au moins un annonceur intéressé (9, 9', 9") avec l'autorisation correspondante.

6. Le procédé selon l'une quelconque des Revendications précédentes, où la radiodiffusion de la au moins une unité locale (1, 1', 1") est exécutée simultanément dans un spectre de différentes technologies radio du même opérateur de réseau mobile.

7. Le procédé selon l'une quelconque des Revendications 1 à 6, où la radiodiffusion de la au moins une unité locale (1, 1', 1") est exécutée simultanément dans un spectre de différents opérateurs mobiles, l'unité centrale (2) gérant les identités capturées pour les téléphones mobiles (3, 3', 3") desdits opérateurs mobiles.

8. Un système de marketing local sur le point de vente, le système comprenant :
- au moins une unité locale (1, 1', 1") munie d'un moyen d'émetteur-récepteur radio cellulaire destiné à l'émission et à la réception de signaux dans le spectre soumis à licence d'au moins un opérateur de réseau mobile, chaque unité locale (1, 1', 1") étant située dans une zone de marketing locale à l'intérieur d'une zone de couverture correspondante (4, 4', 4"), et comprenant :
- un moyen configuré de façon à radiodiffuser un code de zone de localisation, LAC, différent de tout autre LAC des cellules radio du réseau mobile dans le voisinage,
- un moyen configuré de façon à établir un dialogue d'actualisation de localisation avec tout téléphone mobile (3, 3', 3") répondant à la radiodiffusion LAC, à obtenir à partir de chaque téléphone mobile répondant (3, 3', 3") son numéro IMSI,
- un moyen configuré de façon à envoyer un message de rejet d'actualisation de localisation à chaque téléphone mobile (3, 3', 3") dont le numéro IMSI a été obtenu,
- un moyen configuré de façon à envoyer ledit numéro IMSI à une unité centrale (2),
- l'unité centrale (2) comprenant :
- un moyen configuré de façon à obtenir, pour chaque numéro IMSI, une identité d'utilisateur utile à des annonceurs,
- un moyen configuré de façon à recevoir des demandes à partir d'au moins un annonceur (9, 9', 9") destinées à la capture d'identités d'utilisateur dans au moins une zone de marketing locale déterminée,
- un moyen configuré de façon à déterminer, pour chaque identité d'utilisateur reçue, le au moins un annonceur (9, 9', 9") intéressé par la capture des identités d'utilisateur dans la zone de marketing locale correspondant à ladite identité d'utilisateur reçue, et à fournir (20) ladite identité d'utilisateur au au moins un annonceur intéressé (9, 9', 9").

9. Le système selon la Revendication 8, où l'identité utile à des annonceurs est l'une quelconque parmi les suivantes :
- MSISDN,
- PLMN.

10. Le système selon l'une quelconque des Revendications 8 à 9, où la au moins une unité locale (1, 1', 1") comprend un moyen de configuration d'au moins un des paramètres suivants qui détermine sa zone de couverture correspondante (4, 4', 4") :
- la puissance de transmission de façon à modifier la portée,
- le diagramme de rayonnement du système d'antenne de façon à modifier la forme de la zone de couverture (4),
- les paramètres d'informations système que les cellules régulières dans le réseau mobile radiodiffusent à la totalité des téléphones mobiles.

11. Le système selon l'une quelconque des Revendications 8 à 10, dans lequel l'unité centrale (2) est distante de la au moins une unité locale (1, 1', 1"), où l'unité centrale (2) comprend un moyen de recueil de données (5) configuré de façon à gérer à distance la au moins une unité locale (1, 1', 1").

12. Le système selon l'une quelconque des Revendications 8 à 11, où l'unité centrale (2) comprend un moyen de gestion (6) configuré de façon à, pour chaque numéro IMSI reçu, récupérer (10) l'identité correspondant audit numéro IMSI à partir de l'opérateur mobile correspondant (8', 8').

13. Le système selon l'une quelconque des Revendications 8 à 12, où l'unité centrale (2) est configurée en outre de façon à vérifier, avant la fourniture (20) de l'identité d'utilisateur au au moins un annonceur intéressé (9, 9', 9"), s'il existe une autorisation de fournir l'identité d'utilisateur, de sorte que ladite identité d'utilisateur soit uniquement fournie au au moins un annonceur intéressé (9, 9', 9") avec l'autorisation correspondante.

14. Le système selon l'une quelconque des Revendications 8 à 13, où la au moins une unité locale (1, 1', 1") est configurée de façon à exécuter la radiodiffusion simultanément dans un spectre de différents opérateurs mobiles, l'unité centrale (2) étant configurée de façon à gérer les identités capturées pour les téléphones mobiles (3, 3', 3") desdits opérateurs mobiles.

15. Le système selon l'une quelconque des Revendications 8 à 13, où la au moins une unité locale (1, 1', 1") est configurée de façon à exécuter la radiodiffusion simultanément dans un spectre de différentes technologies radio du même opérateur de réseau mobile.
